# EUROPÄISCHE PATENTSCHRIFT

(11) **EP 3 676 015 B1**
(45) Veröffentlichungstag und Bekanntmachung des Hinweises auf die Patenterteilung: **10.03.2021**
(21) Anmeldenummer: 18795322.9
(22) Anmeldetag: 17.10.2018
(51) Int. Cl.: G01B 11/00, G01B 11/02, G01B 11/24, G06T 7/13, G06T 7/66, G06T 7/73, B05B 7/22

(54) **VERFAHREN UND VORRICHTUNG ZUR MONTAGE EINER DRAHTFÜHRUNG AN EINEM BRENNERKOPF FÜR EINE BESCHICHTUNGSANLAGE**
METHOD AND DEVICE FOR FITTING A WIRE GUIDE ON A BURNER HEAD FOR A COATING INSTALLATION
PROCÉDÉ ET DISPOSITIF DE MONTAGE D'UN GUIDE-FIL SUR UNE TÊTE DE BRÛLEUR POUR UNE INSTALLATION DE REVÊTEMENT

(30) Priorität: 18.10.2017 DE 102017124303
(43) Veröffentlichungstag der Anmeldung: 08.07.2020
(73) Patentinhaber: Grob-Werke GmbH & Co. KG, 87719 Mindelheim (DE)
(72) Erfinder: SCHWEIGER, Matthias, 87665 Mauerstetten (DE); PANDYA, Dineshbhai Parth, 86152 Augsburg (DE); DROPMANN, Maximilian, 87600 Kaufbeuren (DE); SAULE, Heribert, 86863 Langenneufnach (DE); FREIDING, Stefan, 87749 Hawangen (DE); HÄMMERLE, Andreas, 86830 Schwabmünchen (DE); KRAUSE, Uwe-Jens, 87742 Apfeltrach (DE)
(74) Vertreter: Kramer Barske Schmidtchen Patentanwälte PartG mbB
(86) Internationale Anmeldenummer: PCT/EP2018/078380
(87) Internationale Veröffentlichungsnummer: WO 2019/076970

(56) Entgegenhaltungen:
- DE-A1- 4 210 798
- JP-A- H0 312 252
- US-A1- 2002 185 473

## Beschreibung

Die vorliegende Offenbarung betrifft ein Verfahren und eine Vorrichtung zur Montage einer Drahtführung an einem Brennerkopf für eine Beschichtungsanlage. Ein solches Verfahren bzw. eine solche Vorrichtung kommt bevorzugt zur positionsgenauen Montage der Drahtführung im Rahmen einer Wartung des Brennerkopfs zur Anwendung.

Üblicherweise werden beispielsweise Zylinderkurbelgehäuse (Motorblöcke) als Gussbauteil hergestellt. Die in einem entsprechenden Gießprozess unmittelbar hergestellten Innenoberflächen von Zylindern erfüllen meist geometrisch und/oder im Hinblick auf die Oberflächeneigenschaften nicht die an eine Zylinderlauffläche, auf bzw. in der später ein Kolben gleitet, gestellten Anforderungen, wenn das Gussbauteil aus Aluminium oder einem anderen Leichtmetall besteht. Aus diesem Grund werden entweder Zylinderlaufbuchsen, deren Innenoberflächen bereits den Anforderungen entsprechen oder nach dem Einsetzen entsprechend bearbeitet werden, in die Zylinder eingesetzt, oder es werden Beschichtungen auf die Innenoberflächen der Zylinder aufgebracht. Solche Beschichtungen werden beispielsweise mittels einer thermisch gespritzten Beschichtung realisiert. Ein Verfahren zum thermischen Beschichten ist beispielsweise das sogenannte RSW-Verfahren (dabei steht RSW für "Rotating Single Wire"), bei dem ein Ende eines maschinell zugeführten Drahtes eine Anode ausbildet, auf die ein von einer Kathode ausgehender Lichtbogen trifft, der ein Gas oder Gasgemisch in den Plasmazustand überführt, das das Ende des Drahtes beim Auftreffen auf den Draht aufschmilzt. Das aufgeschmolzene Drahtmaterial wird von einem Transportgasgemisch zerstäubt und in Richtung auf die zu beschichtende Zylinderlauffläche beschleunigt. Die so mitgeführten Partikel werden somit unter Verformung derselben auf die Zylinderlauffläche aufgebracht und bilden die Beschichtung. Um die gewünschten Laufeigenschaften des Spritzstrahls zu gewährleisten, ist eine genaue Positionierung der Führung des Anodendrahtes in Bezug auf die anderen Bauteile des Brennerkopfs, insbesondere die Kathode, erforderlich Positionierung der Führung des Anodendrahtes ist beispielsweise in JP H03 12252 A beschrieben

Aufgabe der vorliegenden Erfindung ist es, eine möglichst einfache und reproduzierbare positionsgenaue Montage der Drahtführung an dem Brennerkopf zu ermöglichen, um so die zur Wartung des Brennerkopfs, bei der die Drahtführung demontiert und gegebenenfalls ersetzt wird, erforderliche Zeit zu verringern.

Diese Aufgabe wird gelöst mit einem Verfahren nach Anspruch 1 und einer Vorrichtung nach Anspruch 11. Weiterbildungen sind in den abhängigen Ansprüchen angegeben.

Durch das beanspruchte Aufnehmen eines Bildes, das mindestens einen Teil des Brennerkopfs und mindestens einen Teil der an dem Brennerkopf positionierten Drahtführung zeigt, und Verarbeiten des Bildes zur Identifizierung mindestens eines ersten Merkmals der Drahtführung und mindestens eines zweiten Merkmals des Teils des Brennerkopfs, anhand derer jeweilige Positionen der Bauteile in dem Bild bestimmt werden können, kann die Position der Drahtführung bezüglich des Brennerkopfes durch geeignete Bildverarbeitungsverfahren automatisch bestimmt und insbesondere in Echtzeit für einen Monteur angezeigt werden. Somit kann der Monteur ohne weiteres die aktuelle Position der Drahtführung erkennen und diese problemlos auf die gewünschte Position einstellen. Dabei ist es nicht notwendig, dass der Monteur besondere Erfahrung im Hinblick auf das korrekte Einstellen der Drahtführung aufweist. Insbesondere ist es in der Regel nicht notwendig, die Drahtführung möglicherweise mehrmals im eingebauten Zustand des Brennerkopfs in der Beschichtungsanlage nachzujustieren. Statt oder zusätzlich zu einer Anzeige der Position kann dem Monteur beispielsweise optisch und/oder visuell ausgegeben werden, dass die Relativposition der Drahtführung korrekt oder nicht korrekt ist. Gegebenenfalls können zusätzlich Anweisungen zur Korrektur der Position ausgegeben werden.

Durch die geeignete Auswahl der Merkmale, die mit der Bildaufnahmevorrichtung aufzunehmen sind bzw. anhand derer die Bestimmung der Positionen erfolgen, kann ebenfalls eine sichere Identifizierung derselben sowie eine hohe Reproduzierbarkeit gewährleitet werden. Insbesondere werden bevorzugt Merkmale wie Kanten oder Konturen von Bauteilen ausgewählt, die eindeutig montiert werden und mit fortschreitender Laufzeit möglichst keinem oder nur einem geringen Verschleiß unterliegen. Zudem erfolgt die Auswahl der Merkmale derart, dass sie in einem möglichst kleinen Bildausschnitt liegen, damit eine maximale Genauigkeit bei der Positionierung erzielt werden kann.

Damit die Merkmale sicher von der Bildaufnahmevorrichtung erkannt werden können, ist bevorzugt, dass die Bereiche der Drahtführung und/oder des Brennerkopfs mit den jeweiligen Merkmalen auf geeignete Weise beleuchtet werden. Dabei ist die Beleuchtung eines Merkmals abhängig von beispielsweise den Materialien, der Geometrie und der Oberflächenbeschaffenheit der jeweiligen Bauteile und/oder Relativpositionen der Bildaufnahmevorrichtung, der Beleuchtung und des Merkmals gewählt. Durch eine geeignete Beleuchtung können die entsprechenden Kanten oder Konturen von der Bildaufnahmevorrichtung sicher erkannt werden. Dabei ist insbesondere eine Abstimmung der Bildaufnahmevorrichtung mit den jeweiligen Beleuchtungseinheiten erforderlich, damit das ausgesandte Licht möglichst nur oder gerade möglichst wenig von den dafür vorgesehenen Oberflächen der Bauteile in das Objektiv der Bildaufnahmevorrichtung reflektiert wird. So ist beispielsweise eine Spot-Beleuchtung, die unter einem vorbestimmten Winkel zu dem Brennerkopf angeordnet ist, gut geeignet, um die Kanten der Drahtführung möglichst sicher zu erkennen.

Durch die vorgegebene Lagebeziehung der Bildaufnahmevorrichtung zu dem Brennerkopf können eine hohe Reproduzierbarkeit und ferner eine Verkürzung der für die Montage benötigten Zeit erhalten werden. So muss die Bildaufnahmevorrichtung nicht jedes Mal erneut bezüglich des Brennerkopfs positioniert werden. Insbesondere durch das Montieren des gesamten Brennerkopfs an einer Montagevorrichtung derart, dass dieser die vorgegebene Lagebeziehung zu der Bildaufnahmevorrichtung und den Beleuchtungseinheiten aufweist, ist es nicht notwendig, die Kamera und die Beleuchtungseinheiten stets neu auf den Brennerkopf auszurichten, um den gewünschten Bildausschnitt erfassen zu können und die jeweiligen Merkmale der Bauteile sicher erkennen zu können. Darüber hinaus kann während der Montage der Drahtführung an dem Brennerkopf auf der eigens dafür vorgesehenen Montagevorrichtung die Beschichtungsanlage mit einem anderen Brennerkopf weiter betrieben werden. Auf diese Weise kann eine Stillstandszeit der Beschichtungsanlage minimiert werden.

Durch das Aufnehmen einer Mehrzahl von Bildern mit einer vorgegebenen Frequenz und das Mitteln der anhand der Mehrzahl von Bildern bestimmten Positionen beispielsweise der Drahtführung können eine Genauigkeit und eine Zuverlässigkeit der Positionsbestimmung anhand des von der Bildaufnahmevorrichtung aufgenommen Bildausschnitts erhöht werden.

Ausführungsformen und Weiterbildungen der Erfindung werden im Weiteren anhand der Figuren beschrieben. Es zeigen:
Fig. 1 eine schematische Seitenansicht eines an einer Montagevorrichtung angebrachten Brennerkopfs;
Fig. 2 eine Draufsicht auf die Montagevorrichtung mit dem Brennerkopf; und
Fig. 3 ein von einer Bildaufnahmevorrichtung aufgenommenes Bild eines Teils des Brennerkopfs mit einer an diesem positionierten Drahtführung.

Das nachfolgend beschriebene Verfahren und die nachfolgend beschriebene Vorrichtung gemäß einer Ausführungsform dienen zur positionsgenauen Montage einer Drahtführung an einem Brennerkopf für eine Beschichtungsanlage, insbesondere bei einer Verwendung des RSW-Verfahrens zur Beschichtung von Oberflächen.

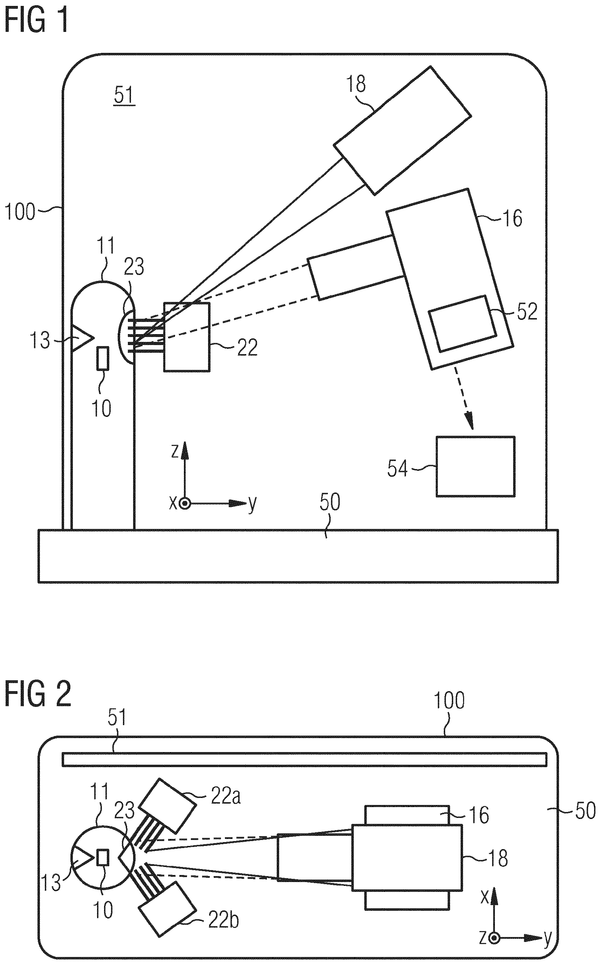

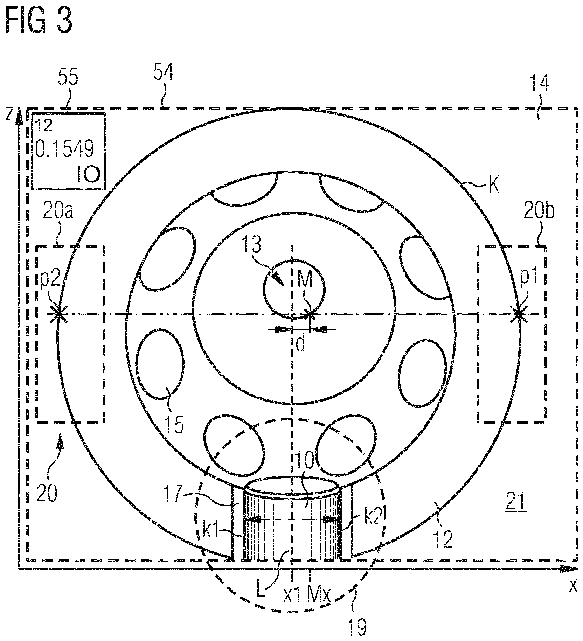

Fig. 1 zeigt eine Ausführungsform einer Montagevorrichtung 100 zur Montage einer Drahtführung 10 an einem Brennerkopf 11 für eine Beschichtungsanlage zur thermischen Beschichtung. Wie in Fig. 1 gezeigt, weist der Brennerkopf 11 beispielsweise eine im Wesentlichen zylindrische Form auf, mit einem Gehäuse, in dem an einem Ende eine Kathode 13 verschraubt ist. Auf der der Kathode 13 gegenüberliegenden Seite weist das Gehäuse des Brennerkopfs 11 eine Düsenöffnung 23 auf. Über Kanäle im Inneren des Gehäuses werden für den von dem Brennerkopf durchzuführenden Beschichtungsprozess benötigte Gase transportiert. Insbesondere wird ein Gas oder Gasgemisch an der Kathode 13 vorbei geführt und anschließend in den Plasmazustand übergeführt. Ferner wird ein Transportgas über eine in Fig. 3 näher gezeigte Transportgasdüse 12 mittels mehreren Zufuhrkanäle 15 in Richtung der Düsenöffnung 23 zugeführt.

In dem Bereich zwischen der Kathode 13 und der Düsenöffnung 23 des Brennerkopfs 11 wird der Draht zugeführt, der die Anode bildet. Dies geschieht mittels der Drahtführung 10, die in Fig. 3 näher gezeigt ist. Wie in Fig. 3 gezeigt, weist die Transportgasdüse 12 eine Aussparung 17 auf, in der die Drahtführung 10 angeordnet ist, die im Wesentlichen als ein in Längsrichtung des Brennerkopfs 11 verlaufendes Rohr ausgebildet ist.

Bei einem Austausch der Drahtführung 10 bzw. einer Wartung des Brennerkopfs 11 wird der Brennerkopf 11 an der Montagevorrichtung 100 montiert, so dass er im Wesentlichen senkrecht positioniert ist, wobei sich die Kathode 13 und die Transportgasdüse 12 an dem oberen Ende desselben befinden. Beispielsweise wird der Brennerkopf 11 mit der Montagevorrichtung 100 verschraubt, etwa über ein nicht gezeigtes Adapterstück, das an einer Bodenplatte 50 der Montagevorrichtung 100 angeordnet ist und eine Geometrie aufweist, die der Verbindung des Brennerkopfs 11 mit einer zugehörigen Lanze in der Beschichtungsanlage entspricht. Die Montagevorrichtung 100 weist neben der Bodenplatte 50 eine Halterung 51, z.B. ein Blech, das im Wesentlichen vertikal an der Bodenplatte 50 befestigt ist, eine Bildaufnahmevorrichtung 16, die an der Halterung 51 angebracht ist, und ein Beleuchtungssystem mit einer ersten Lichtquelle 18 und einer zweiten Lichtquelle 22 auf, die ebenfalls an der Halterung 51 angebracht sind. Dabei ist die Bildaufnahmevorrichtung 16 derart an der Montagevorrichtung 100 angebracht, dass sie eine vorgegebene Lagebeziehung zu dem an der Montagevorrichtung 100 angebrachten Brennerkopf 11 aufweist. Insbesondere ist die Bildaufnahmevorrichtung 16, die beispielsweise als eine Kamera wie eine intelligente Kamera (Smart-Kamera) ausgebildet sein kann, derart an der Halterung 51 angebracht, dass das von der Kamera aufgenommene Bild die Transportgasdüse 12 des Brennerkopfs 11 und die Drahtführung 10 zeigt. Die erste und die zweite Lichtquelle 18, 22 sind ebenfalls derart an der Montagevorrichtung 100 befestigt, dass sie eine vorgegebene Lagebeziehung zu dem Brennerkopf 11 aufweisen und insbesondere den Bereich des Brennerkopfes 11 mit der Transportgasdüse 12 und der Drahtführung 10 beleuchten, was im Folgenden genauer beschrieben wird.

Die Montagevorrichtung 100 weist ferner eine Verarbeitungseinheit 52 auf, die zur Verarbeitung eines von der Bildaufnahmevorrichtung 16 aufgenommenen Bildes 14 (siehe Fig. 3) angepasst ist. Wie in Fig. 1 gezeigt, kann die Verarbeitungseinheit 52 bei einigen Ausführungsformen in die Bildaufnahmevorrichtung 16 integriert sein, das heißt, diese kann als die bereits erwähnte Smart-Kamera ausgebildet sein. Das von der Bildaufnahmevorrichtung 16 aufgenommene Bild 14 wird auf einer Anzeigeeinheit 54 angezeigt, die ebenfalls zum Anzeigen eines Ergebnisses der Verarbeitung durch die Verarbeitungseinheit 52 angepasst sein kann. Es versteht sich, dass bei anderen Ausführungsformen die Verarbeitungseinheit 52 getrennt von der Bildaufnahmevorrichtung 16 vorgesehen sein kann, beispielsweise als Bestandteil eines externen Rechensystems, das über eine geeignete Schnittstelle mit der Bildaufnahmevorrichtung 16 verbunden ist. Ferner kann die Anzeigeeinheit 54 als beliebige geeignete Vorrichtung zum Anzeigen des von der Bildaufnahmevorrichtung 16 aufgenommen Bildes ausgebildet sein, beispielsweise als ein Bildschirm eines mit der Bildaufnahmevorrichtung 16 verbundenen Rechensystems. Bei anderen Ausführungsformen kann die Anzeigeeinheit 54 auch in die Bildaufnahmevorrichtung 16 integriert sein, das heißt, diese kann eine Anzeige aufweisen, auf der das aufgenommene Bild sowie gegebenenfalls das Ergebnis der Verarbeitung durch die Verarbeitungseinheit 52 angezeigt werden können.

Wie in Fig. 1 gezeigt, ist die Bildaufnahmevorrichtung 16 bei der beispielhaften Ausführungsform derart an der Montagevorrichtung 100 angebracht, dass sie schräg von oben in die Düsenöffnung 23 schaut. Das entsprechende aufgenommene Bild 14 ist in Fig. 3 gezeigt. Bei einigen Ausführungsformen können die Bildaufnahmevorrichtung 16, die erste Lichtquelle 18 und der an einer festgelegten Position angebrachte Brennerkopf 11 im Wesentlichen in einer Ebene liegen (Ebene Y-Z in Fig. 1 und 2), wobei die Bildaufnahmevorrichtung 16 (der mittige Bildstrahl) unter einem ersten vorgegebenen Winkel, zum Beispiel zwischen 5° und 25°, bevorzugt 9° und 13°, zur Horizontalen an der Montagevorrichtung 100 angebracht ist. Die erste Lichtquelle 18, die beispielsweise als Spot-Beleuchtung ausgebildet sein kann, ist derart an der Montagevorrichtung 100 angebracht, dass sie unter einem zweiten vorgegebenen Winkel, zum Beispiel zwischen 30° und 80°, bevorzugt 45° bis 50°, noch bevorzugter 47° bis 48°, zur Horizontalen an der Montagevorrichtung 100 angebracht ist bzw. Licht unter den angegebenen Winkeln bezüglich der Horizontalen ausstrahlt. Bei der angegebenen Ausrichtung ist gewährleistet, dass das von der Drahtführung 10 reflektierte Licht von der ersten Lichtquelle 18 zu dem Objektiv der Bildaufnahmevorrichtung 16 gelangt und in dem von derselben aufgenommenen Bild 14 die im Folgenden erläuterten Merkmale insbesondere der Drahtführung 10 erkannt werden können. Der Arbeitsabstand der Bildaufnahmevorrichtung 16 beträgt dabei ca. 90 bis 105 mm. Die Bildaufnahmevorrichtung 16 kann beispielsweise eine Auflösung von 5 Megapixel aufweisen, was zu einer Pixelgröße von etwa 5 µm führt.

Der Arbeitsabstand der ersten Lichtquelle 18 (der Spot-Beleuchtung) beträgt zwischen 200 und 300 mm, beispielsweise ca. 260 mm. Bei diesem Abstand ist der Spot an der Position der Drahtführung 10 am kleinsten und intensivsten. Es versteht sich jedoch, dass der Arbeitsabstand abhängig von der Konfiguration der Spot-Beleuchtung variieren kann. Das von der ersten Lichtquelle 18 ausgesandte Licht kann in einem Wellenlängenbereich zwischen 350 und 850 mm liegen.

Wie in Fig. 1 und 2 gezeigt, besteht die zweite Lichtquelle 22 aus zwei Lichtquellen 22a, 22b, die bezüglich der Ebene, in der die Bildaufnahmevorrichtung 16, die erste Lichtquelle 18 und der Brennerkopf 11 liegen, symmetrisch auf beiden Seiten dieser Ebene vorgesehen sind. Dabei sind die zwei Lichtquellen 22a, 22b bevorzugt etwa auf gleicher Höhe mit der Düsenöffnung 23 vorgesehen, um diese auszuleuchten, und bevorzugt unter einem Winkel zwischen 45° und 75°, bevorzugt 55° bis 60°, zu der Ebene angeordnet. Ein Abstand der Lichtquellen 22a, 22b zu dem zu beleuchtenden Bereich beträgt beispielsweise zwischen 20 und 100 mm, insbesondere zwischen 30 und 60 mm.

Wie in Fig. 3 gezeigt, beleuchtet die erste Lichtquelle 18 einen ersten Bereich 19 des Brennerkopfs 11, in dem die Drahtführung 10 enthalten ist. Die zwei zweiten Lichtquellen 22a, 22b beleuchten einen zweiten Bereich 20 des Brennerkopfs 11, insbesondere zwei Teilbereiche 20a und 20b auf bezüglich der Transportgasdüse 12 einander gegenüberliegenden Seiten. Die zweiten Lichtquellen 22a, 22b können beispielsweise Flächenlichtquellen sein, die Licht im Infrarotbereich aussenden und/oder gepulst betrieben werden können. Dies dient zum Schutz des Bedieners der Montagevorrichtung, so dass dieser nicht durch Reflexionen im sichtbaren Bereich beeinträchtigt wird.

Das Verfahren zur Montage bzw. Positionierung der Drahtführung 10 an dem Brennerkopf 11 gemäß der vorliegenden Ausführungsform wird im Folgenden unter Bezugnahme auf Fig. 1 bis 3 näher erläutert.

In einem ersten Schritt wird der Brennerkopf 11 an einer vorbestimmten Position an der Montagevorrichtung 100 angebracht. Wie bereits oben erläutert, kann der Brennerkopf 11 dazu, gegebenenfalls mit einem geeigneten Adapterstück, an der Montagevorrichtung 100 verschraubt werden.

Nach der Montage des Brennerkopfs 11 an der Montagevorrichtung 100 befindet sich dieser an einer vorbestimmten Montageposition. Insbesondere befindet sich die Düsenöffnung 23 bzw. die Transportgasdüse 12 an einer festgelegten Position, so dass die an der Montagevorrichtung 100 angebrachte Bildaufnahmevorrichtung 16 und die erste Lichtquelle 18 und die zweiten Lichtquellen 22a, 22b jeweils eine vorgegebene Lagebeziehung zu der Transportgasdüse 12 und der Drahtzuführung 10 aufweisen. In diesem Zustand kann die Bildaufnahmevorrichtung 16 den im Voraus ausgewählten Bildausschnitt, in dem insbesondere die Transportgasdüse 12 und die bezüglich dieser zu positionierende Drahtführung 10 enthalten sind, aufnehmen. Das aufgenommene Bild 14 ist in Fig. 3 gezeigt und wird auf der Anzeigeeinheit 54 als Standbild oder Livestream angezeigt. Wie in Fig. 3 gezeigt, zeigt das Bild 14 mindestens einen Teil des Brennerkopfs 11 und mindestens einen Teil der an dem Brennerkopf 11 positionierten Drahtführung 10. Der mindestens eine Teil des Brennerkopfs 11 umfasst dabei bei der vorliegenden Ausführungsform die Transportgasdüse 12 bzw. den Randbereich derselben. Ferner ist, wie in Fig. 3 gezeigt, die in der Aussparung 17 vorgesehene Drahtführung 10 zu sehen.

Die Verarbeitungseinheit 52 ist nun dazu angepasst, das von der Bildaufnahmevorrichtung 16 aufgenommene Bild 14 derart zu verarbeiten, dass ein erstes Merkmal der Drahtführung 10, anhand dessen eine Position x1 der Drahtführung 10 auf einer Achse X in dem Bild 14 bestimmt werden kann, und mindestens ein zweites Merkmal der Transportgasdüse 12, anhand dessen eine Bezugsposition M derselben in dem Bild 14 bestimmt werden kann, identifiziert werden können. Die Achse X ist dabei die Achse, die durch die Richtung festgelegt ist, in der die Drahtführung 10 verstellt bzw. verschoben werden kann und zu positionieren ist. Insbesondere ist dies bei der vorliegenden Ausführungsform die Richtung senkrecht zu der Längsrichtung der Drahtführung 10 und senkrecht zur Strahlrichtung. Dabei ist die Verarbeitungseinheit 52 insbesondere dazu angepasst, die Position x1 der Drahtführung 10 basierend auf dem identifizierten ersten Merkmal derselben zu bestimmen und die Bezugsposition M der Transportgasdüse 12 basierend auf dem mindestens einen identifizierten zweiten Merkmal zu bestimmen. Basierend darauf kann die Verarbeitungseinheit 52 dann einen Abstand d zwischen der Position x1 der Drahtführung 10 auf der Achse X und einer Koordinate Mx der Bezugsposition M auf der Achse X bestimmen. Der bestimmte Abstand d kann dann auf der Anzeigeeinheit 54 angezeigt werden. Dies wird im Folgenden genauer beschrieben.

Das Merkmal der Drahtführung 10, das anhand des Bildes 14 zu bestimmen ist, umfasst beispielsweise mindestens eine Kante k1 oder k2 der Drahtführung 10, die senkrecht zu der Achse X verläuft. Dazu ist es erforderlich, dass die Umrisse der Drahtführung mit möglichst hohem Kontrast dargestellt werden können. Dazu wird die bereits erwähnte Spot-Beleuchtung verwendet, die unter der sorgfältig auf die Position der Bildaufnahmevorrichtung 16 abgestimmten Lagebeziehung zu dieser vorgesehen ist. Ferner empfiehlt es sich, die Mantelfläche der Aussparung 17, in der die Drahtführung 10 positioniert ist, möglichst zu reinigen und von Verschmutzungen und Anhaftungen freizuhalten, um das Licht möglichst gut zu reflektieren. Auf diese Weise wird das Licht der ersten Lichtquelle 18, das auf die Mitte der zylindrischen Mantelfläche der Drahtführung 10 trifft, direkt in das Objektiv der Bildaufnahmevorrichtung 16 reflektiert, während die Drahtführung 10 in dem Bild 14 hin zu den Rändern derselben immer dunkler dargestellt wird, da in diesem Bereich das Licht nicht mehr in das Objektiv der Bildaufnahmevorrichtung 16 reflektiert wird. Insbesondere an den Kanten k1 und k2 der Drahtführung 10 gibt es annähernd keine Reflexion. Auf der anderen Seite erscheint die Mantelfläche der Aussparung 17 hinter der Drahtführung 10 als hell, da von dieser das Licht zu der Bildaufnahmevorrichtung 16 reflektiert wird. Auf diese Weise können die Kanten k1 und k2 der Drahtführung 10 in dem Bild 14 mit hohem Kontrast dargestellt werden. Durch geeignete bekannte Bildverarbeitungsalgorithmen, beispielsweise Algorithmen zur Kantendetektion, Farberkennung etc., können somit die Kanten k1 und k2 bzw. die X-Koordinaten derselben in dem Bild 14 bestimmt werden. Somit kann ebenfalls aufgrund der Symmetrie der Drahtführung 10 die Koordinate x1 der Mittellinie zwischen den Kanten k1 und k2 auf der Achse X berechnet werden. Daraus ergibt sich eine aktuelle Position x1 der Drahtführung 10 entlang der Achse X.

Auf ähnliche Weise wird durch die zweite Lichtquelle 22 der Randbereich der Transportgasdüse 12 auf gegenüberliegenden Seiten in Richtung der Achse X beleuchtet. Auch hier treten z.B. aufgrund unterschiedlicher Oberflächenrauhigkeiten der Transportgasdüse 12 und des außerhalb derselben liegenden Düsenrings 21 der Düsenöffnung 23 und/oder der unterschiedlichen Anordnungswinkel der jeweiligen Flächenbereiche unterschiedlich starke Reflexionen auf, so dass in dem Bild 14 ein ausreichender Kontrast zwischen der Transportgasdüse 12 und dem Düsenring 21 erhalten wird. So wird, wie in Fig. 3 gezeigt, eine im Wesentlichen kreisförmige Kontur K, die den Rand der Transportgasdüse 12 darstellt, erhalten. Anhand dieser Kontur K, die, wie in Fig. 3 gezeigt, eine Symmetrie bezüglich einer Achse Z, die senkrecht zu der Achse X ist, aufweist, kann die Bezugsposition M, insbesondere die Position der Mittellinie bzw. des Mittelpunkts, der Transportgasdüse 12 auf der Achse X bestimmt werden. Dazu können beispielsweise zwei Punkte p1 und p2 auf gegenüberliegenden Seiten der Transportgasdüse 21, die auf der Kontur K liegen und dieselbe Koordinate auf der Achse Z aufweisen, bestimmt werden. Basierend darauf lässt sich dann die X-Koordinate Mx der Bezugsposition M durch Mitteln der X-Koordinaten der Punkte p1 und p2 bestimmen.

Durch Vergleich der Koordinaten der Mittellinie der Drahtführung 10 und der Mittellinie bzw. des Mittelpunkts der Transportgasdüse 12 kann dann ein Abstand d = Mx - x1 zwischen denselben berechnet werden. Anhand dieses Abstands d lässt sich die Abweichung der Position der Drahtführung 10 von der gewünschten Position bestimmen, an der die Mittellinie derselben im Wesentlichen einen vorbestimmten Abstand (Sollabstand) zu der Mittellinie bzw. dem Mittelpunkt der Transportgasdüse 12 (dem Zentrum der Düsenöffnung 23) aufweist bzw. die Abweichung von dem vorbestimmten Abstand kleiner als ein vorgegebener Schwellenwert ist. Der vorbestimmte Abstand kann dabei positiv oder negativ sein und für jeden Brennerkopf bzw. jede Transportgasdüse im Voraus geeignet bestimmt werden. In manchen Fällen kann der vorbestimmte Abstand gleich Null sein. Die jeweiligen Sollabstände können den entsprechenden Brennerköpfen zugeordnet und beispielsweise in einem Speicher, auf den die Verarbeitungseinheit 52 zugreifen kann, abgelegt sein. Eine Auswahl des einem aktuell montierten Brennerkopf zugeordneten Sollabstands kann durch einen Monteur oder automatisch, zum Beispiel durch Erfassen einer geeigneten Kennung des Brennerkopfs, vorgenommen werden.

Der auf die oben angegebene Weise berechnete Abstand d (z.B. 0.1549) kann in einem Anzeigebereich 55 des Bildes 14 auf der Anzeigeeinheit 54 angezeigt werden. Dabei kann die Verarbeitungseinheit 52 dazu angepasst sein, basierend z.B. auf der Auflösung des Bilds 14 und dem Abstand der Bildaufnahmevorrichtung von der Düsenöffnung 23 die in Pixeln erhaltenen Abstände in Längenmaße (z.B. µm) umzurechnen und anzuzeigen. Unter Berücksichtigung dieser Anzeige kann der Monteur nun die Drahtführung 10 in Richtung der Achse X auf die gewünschte Position einstellen, unter Verwendung der dazu vorgesehenen Montagesysteme, insbesondere eines Verschraubungssystems mit Feingewinden und eines dazu vorgesehenen speziellen Werkzeugs zum Verschieben der Drahtführung 10 in X-Richtung. Durch die Anzeige auf der Anzeigeeinheit 54 kann der Monteur so bevorzugt in Echtzeit die aktuelle Position der Drahtführung 10 verfolgen. Sobald der Anzeigeabstand d dem Sollabstand entspricht bzw. die Abweichung von diesem kleiner als der vorgegebene Schwellenwert ist oder im Rahmen der Anzeigegenauigkeit im Wesentlichen Null ist, ist die positionsgenaue Montage der Drahtführung 10 abgeschlossen.

Zur Erhöhung der Zuverlässigkeit der Verarbeitung bzw. Bestimmung der Position der Drahtführung 10 kann vorgesehen sein, dass eine vorbestimmte Anzahl von Bildern (z.B. 10 bis 30 Bilder, insbesondere 15 Bilder) mit einer vorgegeben Frequenz, beispielsweise 1 bis 60 Hz, bevorzugt 1 bis 30 Hz, insbesondere 2 Hz, von der Bildaufnahmevorrichtung 16 aufgenommen und mittels der Verarbeitungseinheit 52 verarbeitet wird. Für jedes aufgenommene Bild können die oben angegebenen Merkmale bzw. Positionen bestimmt werden. Die bestimmten Positionen können dann gemittelt und als gemittelte Positionen auf der Anzeigeeinheit 54 angezeigt werden. Dabei kann auf dem Anzeigebereich 55 die aktuelle Zahl der vorgenommenen Messungen bzw. Aufnahmen angezeigt werden (in dem Beispiel in Fig. 3, Bild Nr. 12). Ebenfalls kann in dem Anzeigebereich 55 angezeigt werden, ob eine erfolgreiche Erkennung der Merkmale vorgenommen werden konnte (IO im vorliegenden Fall einer Erkennung), z.B. dann, wenn für eine bestimmte Anzahl der Messungen einer Messreihe eine erfolgreiche Erkennung erfolgt ist. Auf diese Weise wird verhindert, dass einzelne fehlerhafte Messungen bzw. Erkennungen dazu führen, dass der Monteur die Drahtführung 10 auf eine falsche Position einstellt.

Nach Abschluss der Einstellung der Position der Drahtführung 10 kann der Brennerkopf 11 von der Montagevorrichtung 100 abgenommen und erneut in die Beschichtungsanlage eingebaut werden. Dadurch befindet sich die Drahtführung 10 bereits an der gewünschten Position, so dass die notwendige Qualität der Beschichtung mit dem Brennerkopf gewährleistet werden kann, ohne dass beispielsweise in der Beschichtungsanlage eine Nachjustierung vorgenommen werden muss.

Mit dem oben beschriebenen Verfahren bzw. mit der oben beschriebenen Vorrichtung wird eine individuelle Messstrategie bereitgestellt. Dabei werden die zur Bestimmung der Position der Drahtführung 10 bzw. der Bezugsposition M benötigten Merkmale an Kanten von Bauteilen festgelegt, die eindeutig an dem Brennerkopf 11 montiert werden und möglichst keinem Verschleiß unterliegen. Dies führt zu einer hohen Zuverlässigkeit und Reproduzierbarkeit der Montage. Ebenso werden die Lichtquellen und deren Position geeignet gewählt, um die zu beleuchtenden Merkmale mit einem möglichst hohen Kontrast aufnehmen und darstellen zu können. Dabei ist die Beleuchtungsart abhängig beispielsweise von den Materialien, der Geometrie und der Oberflächenbeschaffenheit der jeweiligen Bauteile.

Damit die Merkmale zuverlässig erkannt werden können, insbesondere im Falle von gekrümmten Oberflächen wie denen der Drahtführung 10, ist es notwendig, die Lichtquellen und die Bildaufnahmevorrichtung exakt aufeinander abzustimmen. So muss beispielsweise die Lichtquelle 18, die die Drahtführung 10 beleuchtet, besonders exakt bezüglich des Brennerkopfs 11 ausgerichtet werden.

Auch wenn die vorliegende Erfindung in Bezug auf die positionsgenaue Montage einer Drahtführung an einem Brennerkopf einer Beschichtungsanlage beschrieben wurde, versteht sich, dass das hierin offenbarte Verfahren allgemein zur positionsgenauen Montage eines ersten Bauteils an einem zweiten Bauteil verwendet werden kann. Das heißt, anstelle der Drahtführung 10 und der Transportgasdüse 12 können mindestens ein Teil des zweiten Bauteils und mindestens ein Teil des an dem zweiten Bauteil positionierten ersten Bauteils durch eine Bildaufnahmevorrichtung aufgenommen werden. Das zweite Bauteil kann dabei erneut an einer Montagevorrichtung angebracht werden, so dass es eine vorgegebene Lagebeziehung zu der Bildaufnahmevorrichtung aufweist. Ebenso können geeignete Merkmale, beispielsweise Kanten oder dergleichen, der jeweiligen Bauteile oder von Bereichen derselben ausgewählt werden, anhand derer die Positionen derselben auf die hierin beschriebene Weise bestimmt werden können. Gegebenenfalls können ebenso eine oder mehrere Lichtquellen vorgesehen werden, um die Erkennung der jeweiligen Merkmale zu ermöglichen bzw. zu verbessern.

Auch wenn im Vorhergehenden die Ränder der Transportgasdüse 12 zur Bestimmung der Bezugsposition M verwendet wurden, versteht sich, dass bei anderen Ausführungsformen andere Bauteile oder Bereiche des Brennerkopfs 11 verwendet werden können, um die Bezugsposition M zu bestimmen. Gegebenenfalls ist dann eine Anpassung der zweiten Lichtquelle 22 und/oder der Bildaufnahmevorrichtung 16 erforderlich. Ferner ist bei Verwendung eines Bauteils, das eine kreisförmige Kontur K aufweist, ebenfalls vorgesehen, dass basierend auf beispielsweise drei Punkten der Kontur K ein Mittelpunkt derselben als die Bezugsposition M bestimmt wird. Auch dann kann der Abstand d des Mittelpunkts der Kontur K zu der Mittellinie der Drahtführung 10 bestimmt werden.

Ebenso versteht sich, dass, für den Fall, dass ein anderes Bauteil als die Drahtführung 10 zu positionieren ist, beispielsweise ein Bauteil, das keine Zylinderform aufweist, nicht notwendigerweise eine Mittellinie des Bauteils bestimmt werden muss, sondern gegebenenfalls auch ein Mittelpunkt etwa einer kreisförmigen oder einer anderen Kontur als die Position des Bauteils auf der Achse X bestimmt werden kann.

Darüber hinaus ist vorgesehen, dass bei anderen Anwendungen anstelle der eindimensionalen Positionierung im vorliegenden Fall auch eine zweidimensionale Positionierung durchgeführt werden kann, indem geeignete Merkmale bestimmt werden, die eine Lage eines Punktes eines zu positionierenden Bauteils bezüglich eines Bezugspunktes an einem anderen Bauteil angeben. Die dazu erforderlichen Berechnungen müssen dann entsprechend angepasst werden.

## Patentansprüche

1. Verfahren zur positionsgenauen Montage einer Drahtführung (10) an einem Brennerkopf (11) für eine Beschichtungsanlage zur thermischen Beschichtung, mit folgenden Schritten:
Aufnehmen eines Bildes (14), das mindestens einen Teil des Brennerkopfs (11) und mindestens einen Teil der an dem Brennerkopf (11) positionierten Drahtführung (10) zeigt, mit einer Bildaufnahmevorrichtung (16), die eine vorgegebene Lagebeziehung zu dem Brennerkopf (11) aufweist;
Verarbeiten des Bildes (14) zur Identifizierung mindestens eines ersten Merkmals der Drahtführung (10), anhand dessen eine Position (x1) der Drahtführung (10) auf einer Achse (X) in dem Bild (14) bestimmt werden kann, und mindestens eines zweiten Merkmals des Teils des Brennerkopfs (11), anhand dessen eine Bezugsposition (M) des Teils des Brennerkopfs (11) in dem Bild (14) bestimmt werden kann;
Bestimmen der Position (x1) der Drahtführung (10) basierend auf dem mindestens einen identifizierten ersten Merkmal;
Bestimmen der Bezugsposition (M) des Teils des Brennerkopfs (11) basierend auf dem mindestens einen identifizierten zweiten Merkmal; und
Verschieben der Drahtführung (10) entlang der Achse (X), bis die Position (x1) der Drahtführung eine vorbestimmte Positionsbeziehung zu der Bezugsposition (M) des Teils des Brennerkopfs (11) aufweist.

2. Verfahren nach Anspruch 1, bei dem die vorbestimmte Positionsbeziehung darin besteht, dass die Position (x1) der Drahtführung (10) auf der Achse (X) einen vorbestimmten Abstand (d) zu einer Koordinate (Mx) der Bezugsposition (M) auf der Achse (X), insbesondere mit einer Abweichung, die kleiner als ein vorgegebener Schwellenwert ist, aufweist oder mit dieser übereinstimmt.

3. Verfahren nach Anspruch 1 oder 2, ferner mit:
Beleuchten mindestens eines ersten Bereichs (19) der Drahtführung (10) mit dem ersten Merkmal durch eine erste Lichtquelle (18); und
Beleuchten mindestens eines zweiten Bereichs (20) des Teils des Brennerkopfs (11) mit dem zweiten Merkmal durch eine zweite Lichtquelle (18),
bei dem die erste Lichtquelle (18) und/oder die zweite Lichtquelle (22) eine vorgegebene Lagebeziehung zu dem Brennerkopf (11) aufweisen bzw. aufweist.

4. Verfahren nach einem der Ansprüche 1 bis 3, ferner mit:
Vorsehen einer Montagevorrichtung (100), an der mindestens die Bildaufnahmevorrichtung (16) angebracht ist;
Anbringen des Brennerkopfs (11) an der Montagevorrichtung (100) derart, dass die Bildaufnahmevorrichtung (16) die vorgegebene Lagebeziehung zu dem Brennerkopf (11) aufweist.

5. Verfahren nach einem der Ansprüche 1 bis 4, bei dem das erste Merkmal mindestens eine Kante (k1) der Drahtführung (10) umfasst, die senkrecht zu der Achse (X) verläuft, bevorzugt ferner mit den Schritten:
Identifizieren einer ersten Kante (k1) und einer zweiten Kante (k2) der Drahtführung (10), die beide senkrecht zu der Achse (X) verlaufen; und
Berechnen einer virtuellen Mittellinie (L) zu der ersten Kante (k1) und der zweiten Kante (k2), deren Koordinate auf der Achse (X) die Position (x1) der Drahtführung (10) angibt.

6. Verfahren nach einem der Ansprüche 1 bis 5, bei dem das zweite Merkmal eine Kontur (K) des Teils des Brennerkopfs (11) umfasst, die eine Symmetrie bezüglich einer zu der Achse (X) senkrechten Achse (Z) aufweist, die die Bezugsposition (M) festlegt.

7. Verfahren nach Anspruch 6, ferner mit:
Beleuchten von zwei einander gegenüberliegenden Bereichen (20a, 20b) der Kontur (K) mittels zweier Lichtquellen (22a, 22b);
Identifizieren von mindestens zwei Punkten (p1, p2) der Kontur (K), wobei mindestens einer der mindestens zwei Punkte (p1, p2) in einem anderen der Bereiche (20a, 20b) liegt als mindestens ein anderer der mindestens zwei Punkte (p1, p2); und
Berechnen der Bezugsposition (M) basierend auf den mindestens zwei Punkten (p1, p2).

8. Verfahren nach Anspruch 3 oder 7, bei dem die zweite Lichtquelle (22) bzw. die mindestens zwei Lichtquellen (22a, 22b) Licht im Infrarotbereich aussenden und/oder gepulst betrieben werden.

9. Verfahren nach einem der Ansprüche 1 bis 8, ferner mit:
Aufnehmen einer vorbestimmten Anzahl von Bildern (14) mit einer vorgegebenen Frequenz, beispielsweise 1 bis 60 Hz, bevorzugt 2 bis 30 Hz;
Bestimmen der Position (x1) der Drahtführung (10) und/oder der Bezugsposition (M) des Teils des Brennerkopfs (11) für jedes aufgenommene Bild;
Mitteln der bestimmten Positionen; und
Anzeigen der gemittelten Positionen auf einer Anzeigeeinheit (54).

10. Verfahren nach einem der Ansprüche 1 bis 9, bei dem der Teil des Brennerkopfs (11) ein Bauteil (12) des Brennerkopfs, insbesondere eine Transportgasdüse desselben, aufweist.

11. Montagevorrichtung (100) zur Montage einer Drahtführung (10) an einem Brennerkopf (11) für eine Beschichtungsanlage zur thermischen Beschichtung, mit:
einem Träger (50), an dem der Brennerkopf (11) an einer festgelegten Position anbringbar ist;
einer Bildaufnahmevorrichtung (16), die derart an der Montagevorrichtung (100) angebracht ist, dass sie eine vorgegebene Lagebeziehung zu dem an der festgelegten Position angebrachten Brennerkopf (11) aufweist;
einer Verarbeitungseinheit (52), die zur Verarbeitung eines von der Bildaufnahmevorrichtung (16) aufgenommenen Bildes (14) angepasst ist; und
einer Anzeigeeinheit (54), die zum Anzeigen eines Ergebnisses der Verarbeitung durch die Verarbeitungseinheit (52) angepasst ist, bei der
die Bildaufnahmevorrichtung (16) angepasst ist zum Aufnehmen eines Bildes (14), das mindestens einen Teil der an dem Brennerkopf (11) positionierten Drahtführung (10) und mindestens einen Teil eines vorbestimmten Bauteils oder Bereichs (12) des Brennerkopfs (11) zeigt,
die Verarbeitungseinheit (52) angepasst ist zum:
Verarbeiten des Bildes (14) zur Identifizierung mindestens eines ersten Merkmals der Drahtführung (10), anhand dessen eine Position (x1) der Drahtführung (10) auf einer Achse (X) in dem Bild (14) bestimmt werden kann, und mindestens eines zweiten Merkmals des vorbestimmten Bauteils oder Bereichs (12), anhand dessen eine Bezugsposition (M) des vorbestimmten Bauteils oder Bereichs (12) in dem Bild (14) bestimmt werden kann;
Bestimmen der Position (x1) der Drahtführung (10) basierend auf dem mindestens einen identifizierten ersten Merkmal;
Bestimmen der Bezugsposition (M) des vorbestimmten Bauteils oder Bereichs (12) basierend auf dem mindestens einen identifizierten zweiten Merkmal; und
Bestimmen eines Abstands (d) zwischen der Position (x1) der Drahtführung (10) auf der Achse (X) und einer Koordinate (Mx) der Bezugsposition (M) auf der Achse (X), und
die Anzeigeeinheit (54) angepasst ist zum Anzeigen des Abstands (d).

12. Montagevorrichtung nach Anspruch 11, ferner mit:
mindestens einer Lichtquelle (18, 22), die zum Beleuchten mindestens eines ersten Bereichs (19) der Drahtführung (10) mit dem ersten Merkmal und mindestens eines zweiten Bereichs (20) des vorbestimmten Bauteils oder Bereichs (12) des Brennerkopfs (11) mit dem zweiten Merkmal ausgebildet ist,
bei der die mindestens eine Lichtquelle (18, 22) derart an der Montagevorrichtung (100) befestigt ist, dass sie eine vorgegebene Lagebeziehung zu dem an der festgelegten Position angebrachten Brennerkopf (11) aufweist.

13. Montagevorrichtung nach Anspruch 12, bei der
die mindestens eine Lichtquelle (18, 22) eine erste Lichtquelle (18), bevorzugt eine Spot-Lichtquelle, die zum Beleuchten mindestens des ersten Bereichs (19) ausgebildet ist, und eine zweite Lichtquelle (22), bevorzugt eine Flächenbeleuchtungslichtquelle, die zum Beleuchten mindestens des zweiten Bereichs (20) ausgebildet ist, aufweist,
die Bildaufnahmevorrichtung (16), die erste Lichtquelle (18) und der an der festgelegten Position angebrachte Brennerkopf (11) im Wesentlichen in einer Ebene liegen, wobei die Bildaufnahmevorrichtung (16) unter einem ersten vorgegebenen Winkel, zum Beispiel zwischen 5° und 25°, bevorzugt 9° bis 13°, zur Horizontalen an der Montagevorrichtung (100) angebracht ist und die erste Lichtquelle (18) unter einem zweiten vorgegebenen Winkel, zum Beispiel zwischen 30° und 80°, bevorzugt 45° bis 50°, noch bevorzugter 47° bis 48°, zur Horizontalen an der Montagevorrichtung (100) angebracht ist, und
die zweite Lichtquelle (22) zwei Lichtquellen (22a, 22b) aufweist, die bezüglich der Ebene symmetrisch auf beiden Seiten der Ebene vorgesehen sind, bevorzugt auf gleicher Höhe mit dem vorbestimmten Bauteil oder Bereich (12) und unter einem jeweiligen Winkel zwischen 45° und 75°, bevorzugt 55° bis 60°, zu der Ebene.

14. Montagevorrichtung nach Anspruch 13, bei der die zweite Lichtquelle (22) Licht im Infrarotbereich aussendet und/oder gepulst betrieben wird.

15. Montagevorrichtung nach einem der Ansprüche 11 bis 14, bei der
das Bestimmen der Position (x1) der Drahtführung (10) durch die Verarbeitungseinheit (52) beinhaltet:
Identifizieren einer ersten Kante (k1) und einer zweiten Kante (k2) der Drahtführung (10), die beide senkrecht zu der Achse (X) verlaufen; und
Berechnen einer virtuellen Mittellinie (L) zu der ersten Kante (k1) und der zweiten Kante (k2), deren Koordinate auf der Achse (X) die Position (x1) der Drahtführung (10) angibt, und
das Bestimmen der Bezugsposition (M) der vorbestimmten Bauteils oder Bereichs (12) durch die Verarbeitungseinheit (52) beinhaltet:
Identifizieren einer Kontur (K) des vorbestimmten Bauteils oder Bereichs (12), die eine Symmetrie bezüglich einer zu der Achse (X) senkrechten Achse (Z) aufweist, die die Bezugsposition (M) festlegt.

## Claims

1. Method for the positionally accurate installation of a wire guide (10) on a torch head (11) for a coating system for thermal coating, including the following steps:
by using an image capture device (16) that has a predetermined spatial relationship with respect to the torch head (11), capturing an image (14) that shows at least a portion of the torch head (11) and at least a portion of the wire guide (10) positioned on the torch head;
processing the image (14) to identify at least one first feature of the wire guide (10), based on which first feature a position (x1) of the wire guide (10) on an axis (X) in the image (14) can be determined, and at least one second feature of the portion of the torch head (11), based on which second feature a reference position (M) of the portion of the torch head (11) in the image (14) can be determined;
determining the position (x1) of the wire guide (10) based on the at least one identified first feature;
determining the reference position (M) of the portion of the torch head (11) based on the at least one identified second feature; and
moving the wire guide (10) along the axis (X) until the position (x1) of the wire guide has a predetermined positional relationship with respect to the reference position (M) of the portion of the torch head (11).

2. Method according to claim 1, wherein the predetermined positional relationship consists in that the position (x1) of the wire guide (10) on the axis (X) has a predetermined distance (d) to a coordinate (Mx) of the reference position (M) on the axis (X), in particular having a deviation that is smaller than a predetermined threshold value, or coincides therewith.

3. Method according to claim 1 or 2, further including:
using a first light source (18), illuminating at least one first region (19) of the wire guide (10), which at least one first region (19) includes the first feature; and
using a second light source (18), illuminating at least one second region (20) of the portion of the torch head (11) that includes the second feature,
wherein the first light source (18) and/or the second light source (22) have or has a predetermined spatial relationship with respect to the torch head (11).

4. Method according to one of claims 1 to 3, further including:
providing an installation device (100) on which at least the image capture device (16) is attached;
attaching the torch head (11) to the installation device (100) such that the image capture device (16) has the predetermined spatial relationship with respect to the torch head (11).

5. Method according to one of claims 1 to 4, wherein the first feature comprises at least one edge (k1) of the wire guide (10), which edge (k1) extends perpendicular to the axis (X), preferably further including the steps:
identifying a first edge (k1) and a second edge (k2) of the wire guide (10), which first edge (k1) and second edge (k2) both extend perpendicular to the axis (X); and
calculating a virtual centerline (L) with respect to the first edge (k1) and the second edge (k2), the coordinate of which centerline (L) on the axis (X) indicates the position (x1) of the wire guide (10).

6. Method according to one of claims 1 to 5, wherein the second feature comprises a contour (K) of the portion of the torch head (11) that has a symmetry with respect to an axis (Z) perpendicular to the axis (X), which axis defines the reference position (M).

7. Method according to claim 6, further including:
illuminating two mutually opposing regions (20a, 20b) of the contour (K) using two light sources (22a, 22b);
identifying at least two points (p1, p2) of the contour (K), wherein at least one of the at least two points (p1, p2) lies in a different one of the regions (20a, 20b) than at least one other of the at least two points (p1, p2); and
calculating the reference position (M) based on the at least two points (p1, p2).

8. Method according to claim 3 or 7, wherein the second light source (22) or the at least two light sources (22a, 22b) emit light in the infrared range and/or are operated in a pulsed manner.

9. Method according to one of claims 1 to 8, further including:
capturing a predetermined number of images (14) at a predetermined frequency, for example, 1 to 60 Hz, preferably 2 to 30 Hz;
determining the position (x1) of the wire guide (10) and/or the reference position (M) of the portion of the torch head (11) for each captured image;
averaging the determined positions; and
displaying the averaged positions on a display unit (54).

10. Method according to one of claims 1 to 9, wherein the portion of the torch head (11) includes a component (12) of the torch head, in particular a transport gas nozzle thereof.

11. Installation device (100) for installing a wire guide (10) on a torch head (11) for a coating system for thermal coating, including:
a support (50) on which the torch head (11) is affixable at a defined position;
an image capture device (16) that is attached to the installation device (100) such that it has a predetermined spatial relationship with respect to the torch head (11) attached at the defined position;
a processing unit (52) that is adapted to process an image (14) captured by the image capture device (16); and
a display unit (54) that is adapted to display a result of the processing by the processing unit (52), wherein
the image capture device (16) is adapted to capture an image (14) that shows at least a portion of the wire guide (10) positioned on the torch head (11) and shows at least a portion of a predetermined component or region (12) of the torch head (11),
the processing unit (52) is adapted to:
process the image (14) to identify at least one first feature of the wire guide (10), based on which first feature a position (x1) of the wire guide (10) on an axis (X) in the image (14) can be determined, and at least one second feature of the predetermined component or region (12), based on which second feature a reference position (M) of the predetermined component or region (12) in the image (14) can be determined;
determine the position (x1) of the wire guide (10) based on the at least one identified first feature;
determine the reference position (M) of the predetermined component or region (12) based on the at least one identified second feature; and
determine a distance (d) between the position (x1) of the wire guide (10) on the axis (X) and a coordinate (Mx) of the reference position (M) on the axis (X), and the display unit (54) is adapted to display the distance (d).

12. Installation device according to claim 11, further including:
at least one light source (18, 22) that is configured to illuminate at least one first region (19) of the wire guide (10) having the first feature, and at least one second region (20) of the predetermined component or region (12) of the torch head (11) having the second feature,
wherein the at least one light source (18, 22) is attached to the installation device (100) such that it has a predetermined spatial relationship with respect to the torch head (11) attached at the defined position.

13. Installation device according to claim 12, wherein
the at least one light source (18, 22) includes a first light source (18), preferably a spot light source, which is configured to illuminate at least the first region (19), and a second light source (22), preferably an area illumination light source, which is configured to illuminate at least the second region (20),
the image capture device (16), the first light source (18), and the torch head (11) attached at the defined position lie, in essence, in a plane, wherein the image capture device (16) is attached to the installation device (100) at a first predetermined angle, for example, between 5° and 25°, preferably 9° to 13°, with respect to the horizontal, and the first light source (18) is attached to the installation device (100) at a second predetermined angle, for example, between 30° and 80°, preferably 45° to 50°, still more preferably 47° to 48°, with respect to the horizontal, and
the second light source (22) includes two light sources (22a, 22b) that are provided on both sides of the plane symmetrical with respect to the plane, preferably at the same height as the predetermined component or region (12), and at a particular angle between 45° and 75°, preferably 55° to 60°, with respect to the plane.

14. Installation device according to claim 13, wherein the second light source (22) emits light in the infrared range and/or is driven in a pulsed manner.

15. Installation device according to one of claims 11 to 14, wherein
the determination of the position (x1) of the wire guide (10) by the processing unit (52) includes:
identifying a first edge (k1) and a second edge (k2) of the wire guide (10), which first edge (k1) and second edge (k2) both extend perpendicular to the axis (X); and
calculating a virtual centerline (L) with respect to the first edge (k1) and the second edge (k2), the coordinate of which centerline (L) on the axis (X) indicates the position (x1) of the wire guide (10), and
the determination of the reference position (M) of the predetermined component or region (12) by the processing unit (52) includes:
identifying a contour (K) of the predetermined component or region (12) that has a symmetry with respect to an axis (Z) perpendicular to the axis (X), which axis defines the reference position (M).

## Revendications

1. Procédé de montage précis d'un guide-fil (10) au niveau d'une tête de brûleur (11) pour une installation de revêtement réalisant du revêtement thermique, avec les étapes ci-dessous consistant à :
enregistrer une image (14), qui montre au moins une partie de la tête de brûleur (11) et au moins une partie du guide-fil (10) positionné au niveau de la tête de brûleur (11), avec un dispositif d'enregistrement d'image (16) qui présente une relation de position prédéfinie par rapport à la tête de brûleur (11);
traiter l'image (14) afin d'identifier au moins une première caractéristique du guide-fil (10), sur la base de laquelle il est possible de déterminer une position (x1) du guide-fil (10) sur un axe (X) dans l'image (14), et au moins une seconde caractéristique de la partie de la tête de brûleur (11), sur la base de laquelle il est possible de déterminer une position de référence (M) de la partie de la tête de brûleur (11) dans l'image (14) ;
déterminer la position (x1) du guide-fil (10) en se basant sur l'au moins une première caractéristique identifiée ;
déterminer la position de référence (M) de la partie de la tête de brûleur (11) en se basant sur l'au moins une seconde caractéristique identifiée ; et
pousser le guide-fil (10) le long de l'axe (X) jusqu'à ce que la position (x1) du guide-fil présente une relation de position prédéterminée par rapport à la position de référence (M) de la partie de la tête de brûleur (11).

2. Procédé selon la revendication 1, dans lequel la relation de position prédéterminée est que la position (x1) du guide-fil (10) sur l'axe (X) présente une distance prédéterminée (d) par rapport à une coordonnée (Mx) de la position de référence (M) sur l'axe (X), en particulier avec un écart qui est inférieur à une valeur de seuil prédéfinie, ou coïncide avec celle-ci.

3. Procédé selon la revendication 1 ou 2, avec en outre les étapes ci-dessous consistant à :
éclairer par une première source de lumière (18) au moins une première région (19) du guide-fil (10) avec la première caractéristique ; et
éclairer par une seconde source de lumière (18) au moins une seconde région (20) de la partie de la tête de brûleur (11) avec la seconde caractéristique,
dans lequel la première source de lumière (18) et/ou la seconde source de lumière (22) présentent ou présente une relation de position prédéfinie par rapport à la tête de brûleur (11).

4. Procédé selon l'une quelconque des revendications 1 à 3, avec en outre les étapes ci-dessous consistant à :
fournir un dispositif de montage (100) auquel est fixé l'au moins le dispositif d'enregistrement d'image (16) ;
fixer la tête de brûleur (11) au dispositif de montage (100) de telle manière que le dispositif d'enregistrement d'image (16) présente la relation de position prédéfinie par rapport à la tête de brûleur (11).

5. Procédé selon l'une quelconque des revendications 1 à 4, dans lequel la première caractéristique comprend au moins un bord (k1) du guide-fil (10) qui s'étend perpendiculairement à l'axe (X), avec en outre de préférence les étapes ci-dessous consistant à :
identifier un premier bord (k1) et un second bord (k2) du guide-fil (10), qui s'étendent tous deux perpendiculairement à l'axe (X) ; et
calculer, par rapport au premier bord (k1) et au second bord (k2), une ligne centrale virtuelle (L) dont la coordonnée sur l'axe (X) indique la position (x1) du guide-fil (10).

6. Procédé selon l'une quelconque des revendications 1 à 5, dans lequel la seconde caractéristique comprend un contour (K) de la partie de la tête de brûleur (11), qui présente une symétrie par rapport à un axe (Z) perpendiculaire à l'axe (X) qui établit la position de référence (M).

7. Procédé selon la revendication 6, avec en outre les étapes ci-dessous consistant à :
éclairer deux régions (20a, 20b) opposées l'une à l'autre du contour (K) au moyen de deux sources lumineuses (22a, 22b) ;
identifier au moins deux points (p1, p2) du contour (K), dans lequel au moins un des au moins deux points (p1, p2) se situe dans une région (20a, 20b) différente d'au moins un autre des au moins deux points (p1, p2) ; et
calculer la position de référence (M) en se basant sur les au moins deux points (p1, p2).

8. Procédé selon la revendication 3 ou 7, dans lequel la seconde source de lumière (22) ou les au moins deux sources de lumière (22a, 22b) émette(nt) de la lumière dans le domaine infrarouge et/ou fonctionne(nt) de manière puisée.

9. Procédé selon l'une quelconque des revendications 1 à 8, avec en outre les étapes ci-dessous consistant à :
enregistrer un nombre prédéterminé d'images (14) à une fréquence prédéfinie, par exemple de 1 à 60 Hz, de préférence de 2 à 30 Hz ;
déterminer la position (x1) du guide-fil (10) et/ou la position de référence (M) de la partie de la tête de brûleur (11) pour chaque image enregistrée ;
faire la moyenne des positions déterminées ; et
afficher les positions moyennées sur une unité d'affichage (54).

10. Procédé selon l'une quelconque des revendications 1 à 9, dans lequel la partie de la tête de brûleur (11) présente un composant (12) de la tête de brûleur, en particulier une buse de gaz de transport de celle-ci.

11. Dispositif de montage (100) pour le montage d'un guide-fil (10) au niveau d'une tête de brûleur (11) pour une installation de revêtement réalisant du revêtement thermique, avec :
un support (50) sur lequel la tête de brûleur (11) peut être fixée au niveau d'une position établie ;
un dispositif d'enregistrement d'image (16) qui est fixé au dispositif de montage (100) de manière à présenter une relation de position prédéfinie par rapport à la tête de brûleur (11) fixée au niveau de la position établie ;
une unité de traitement (52) qui est adaptée pour le traitement d'une image (14) enregistrée par le dispositif d'enregistrement d'image (16) ; et
une unité d'affichage (54) qui est adaptée pour l'affichage d'un résultat du traitement par l'unité de traitement (52), dans lequel
le dispositif d'enregistrement d'image (16) est adapté pour enregistrer une image (14) qui montre au moins une partie du guide-fil (10) positionné au niveau de la tête de brûleur (11) et au moins une partie d'un composant ou d'une région (12) prédéterminé(e) de la tête de brûleur (11),
l'unité de traitement (52) est adaptée pour :
traiter l'image (14) afin d'identifier au moins une première caractéristique du guide-fil (10), sur la base de laquelle il est possible de déterminer une position (x1) du guide-fil (10) sur un axe (X) dans l'image (14), et au moins une seconde caractéristique du composant ou de la région prédéterminé(e) (12), sur la base de laquelle il est possible de déterminer une position de référence (M) du composant ou de la région prédéterminé(e) (12) dans l'image (14) ;
déterminer la position (x1) du guide-fil (10) en se basant sur l'au moins une première caractéristique identifiée ;
déterminer la position de référence (M) du composant ou de la région prédéterminé(e) (12) en se basant sur l'au moins une seconde caractéristique identifiée ; et
déterminer une distance (d) entre la position (x1) du guide-fil (10) sur l'axe (X) et une coordonnée (Mx) de la position de référence (M) sur l'axe (X), et
l'unité d'affichage (54) est adaptée pour l'affichage de la distance (d).

12. Dispositif de montage selon la revendication 11, comprenant en outre :
au moins une source de lumière (18, 22) conçue pour éclairer au moins une première région (19) du guide-fil (10) avec la première caractéristique et au moins une seconde région (20) du composant ou de la région prédéterminé(e) (12) de la tête de brûleur (11) avec la seconde caractéristique,
dans lequel l'au moins une source de lumière (18, 22) est fixée au dispositif de montage (100) de manière à présenter une relation de position prédéfinie par rapport à la tête de brûleur (11) fixée au niveau de la position établie.

13. Dispositif de montage selon la revendication 12, dans lequel
l'au moins une source de lumière (18, 22) présente une première source de lumière (18), de préférence une source de lumière ponctuelle qui est conçue pour éclairer au moins la première région (19), et une seconde source de lumière (22), de préférence une source de lumière d'éclairage de surface qui est conçue pour éclairer au moins la seconde région (20),
le dispositif d'enregistrement d'image (16), la première source de lumière (18) et la tête de brûleur (11) fixée au niveau de la position établie se situent essentiellement dans un plan, dans lequel le dispositif d'enregistrement d'image (16) est fixé au dispositif de montage (100) avec un premier angle prédéfini, par exemple entre 5° et 25°, de préférence entre 9° et 13°, par rapport à l'horizontale et la première source de lumière (18) est fixée au dispositif de montage (100) avec un second angle prédéfini, par exemple entre 30° et 80°, de préférence entre 45° et 50°, plus préférentiellement entre 47° et 48°, par rapport à l'horizontale, et
la seconde source de lumière (22) présente deux sources de lumière (22a, 22b) qui sont fournies des deux côtés du plan de manière symétrique par rapport au plan, de préférence à la même hauteur que le composant ou la région (12) prédéterminé(e) et avec un angle respectif entre 45° et 75°, de préférence entre 55° et 60°, par rapport au plan.

14. Dispositif de montage selon la revendication 13, dans lequel la seconde source de lumière (22) émet de la lumière dans le domaine infrarouge et/ou fonctionne de manière puisée.

15. Dispositif de montage selon l'une quelconque des revendications 11 à 14, dans lequel
l'étape consistant à déterminer la position (x1) du guide-fil (10) grâce à l'unité de traitement (52) comprend les étapes ci-dessous consistant à :
identifier un premier bord (k1) et un second bord (k2) du guide-fil (10) qui s'étendent tous deux perpendiculairement à l'axe (X) ; et
calculer, par rapport au premier bord (k1) et au second bord (k2), une ligne centrale virtuelle (L) dont la coordonnée sur l'axe (X) indique la position (x1) du guide-fil (10), et
déterminer la position de référence (M) du composant ou de la région prédéterminé(e) (12) par l'unité de traitement (52) contient l'étape ci-dessous consistant à :
identifier un contour (K) du composant ou de la région prédéterminé(e) (12), qui présente une symétrie par rapport à un axe (Z) perpendiculaire à l'axe (X), qui établit la position de référence (M).
